# EUROPEAN PATENT SPECIFICATION

(11) **EP 3 112 656 B1**
(45) Date of publication and mention of the grant of the patent: **13.03.2019**
(21) Application number: 16174938.7
(22) Date of filing: 17.06.2016
(51) Int. Cl.: F02M 35/10, F02B 29/04

(54) **INTAKE AIR SUPPLY CONSTRUCTION FOR ENGINE**
ANSAUGLUFTVERSORGUNG FÜR MOTOR
STRUCTURE D'ALIMENTATION D'AIR D'ADMISSION POUR MOTEUR

(30) Priority: 30.06.2015 JP 2015130915
(43) Date of publication of application: 04.01.2017
(73) Proprietor: Mitsubishi Jidosha Kogyo K.K., Tokyo 108-8410 (JP)
(72) Inventor: KIMURA, Hiroyuki, Tokyo, 108-8410 (JP); ISOBE, Yusuke, Tokyo, 108-8410 (JP)
(74) Representative: Vossius & Partner Patentanwälte Rechtsanwälte mbB

(56) References cited:
- EP-A1- 2 884 072
- DE-A1-102009 025 282
- US-A- 4 452 216
- US-A- 4 693 084

## Description

### Technical Field

The present invention relates to an intake air supply construction in which an intercooler is incorporated in an intake manifold that is provided between an intake pipe and a cylinder head of an engine.

### Background Art

It is conventional practice to an intake air cooling intercooler is installed in an intake air passage of an engine to cool intake air by the intercooler so that the charging efficiency is enhanced to thereby enhance the output of the engine. In these intercoolers, there are an air-to-air intercooler and an air-to-liquid intercooler. The air-to-air intercooler uses running air to cool intake air, and the air-to-liquid intercooler uses a coolant to cool intake air. It is known that the latter has a higher degree of freedom in layout than the former. Namely, the air-to-liquid intercooler can be provided as near to an intake port as possible, thereby making it possible to shorten the length of the intake pipe. For example, an engine is proposed in which a reduction in overall size of a turbocharger system with an intercooler can be realized by disposing an air-to-liquid intercooler within a surge tank of an intake manifold (refer to JP-A-2014-051907).

Other similar constructions are also disclosed in EP 2884072 A1 or DE 102009025282 A1).

### Summary of Invention

### Technical Problems

Incidentally, in case intake air passes through an intercooler without being deflected to a local portion therein, heat transfer takes place in the whole of the intercooler, and therefore, the intake air is cooled with good efficiency. Namely, the cooling efficiency of the intercooler becomes higher when intake air is supplied to the intercooler as uniformly as possible. In the event that an intercooler is disposed in an interior of an intake manifold, however, there are fears that intake air is supplied to the intercooler while being deflected to a local portion of the intercooler as a result of being influenced by a flow of intake air entering the intake manifold.

The invention has been made in view of the problem described above, and one object of the invention is to enhance the cooling efficiency of intake air. The object of the invention is not limited thereto, and another object of the invention is to provide working effects that are induced by configurations to be described in a mode for carrying out the invention which will be described as below and which cannot be obtained by the conventional techniques.

### Solution to Problems

(1) An intake air supply construction for an engine, according to claim 1.
(2) It is preferable that the intake air supply construction for an engine further includes a projecting portion that is disposed upstream of the intercooler in relation to the flowing direction, is provided on an inner surface of the intake manifold so as to project therefrom, and divides the intake air to both sides of the aligning direction.
(3) It is preferable that the projecting portion is provided within a range defined by expanding an outline of a flow path at the downstream end portion of the intake pipe towards the intake manifold along the axis center.
(4) It is preferable that the projecting portion has a shape that tapers towards the inlet.

### Advantageous Effects of Invention

In the intake air supply construction for an engine disclosed, the intake air that flows in from the intake pipe can be diffused to both the sides of the aligning direction within the intake manifold. Namely, the cooling efficiency of the intake air can be enhanced as the intake air can be supplied to the whole of the intercooler.

### Brief Description of Drawings

Fig. 1 is a system diagram showing an overall configuration of an engine that includes an intake air supply construction.
Fig. 2 is a schematic perspective view showing an external appearance of the intake air supply construction.
Fig. 3 is a sectional view taken along a plane A-A and seen from a direction indicated by arrows A in Figs. 2 and 5.
Fig. 4 is a sectional view taken along a line B-B and seen from a direction indicated by arrows B in Fig. 3.
Fig. 5 is a sectional view taken along a line C-C and seen from a direction indicated by arrows C in Figs. 3 and 4.
Fig. 6 is an exploded perspective view of a section taken along a line D-D and seen from a direction indicated by arrows D in Fig. 4 with an intake pipe omitted therefrom.
Fig. 7 is a schematic enlarged perspective view of a projecting portion.

### Description of Embodiments

An intake air supply construction for an engine, which is an embodiment of the invention, will be described by reference to the drawings. The following embodiment describes only an example, and there is no intention to exclude various modifications and technical applications that will not be described in the following embodiment. Configurations of the embodiment can be modified variously within the scope of the claims and can also be selectively adopted or rejected as required or can be combined together as required.

### [1. Engine]

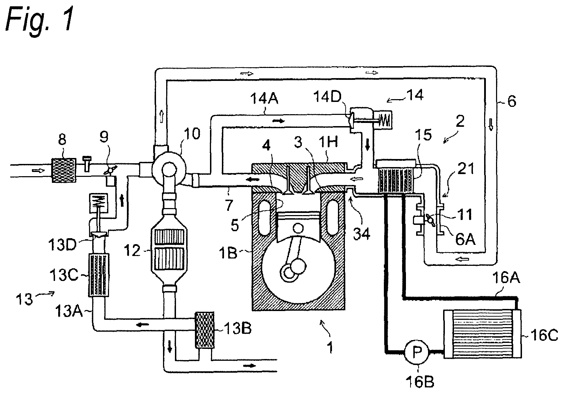

The intake air supply construction of this embodiment is applied to an engine 1 shown in Fig. 1 which is mounted on a vehicle. The engine 1 of this embodiment is an in-line four-cylinder diesel engine and includes two EGR (Exhaust Gas Recirculation) systems 13, 14 and a turbocharger 10. Fig. 1 shows one of a plurality of cylinders 5 that are formed in a cylinder block 1B of the engine 1.

An intake port 3 and an exhaust port 4 are provided for each of the cylinders 5 in a cylinder head 1H of the engine 1. Ends of the plurality of intake ports 3 are opened to combustion chambers, and the other ends of the intake ports 3 are aligned and opened to an intake-side side surface of the cylinder head 1H. Ends of the exhaust ports 4 are opened to the combustion chambers, and the other ends of the exhaust ports 4 are aligned and opened to an exhaust-side side surface of the cylinder head 1H. Hereinafter, a direction in which the openings (upstream inlet-side openings into which intake air flows) of the plurality of intake ports 3 align (an aligning direction) will be referred to as "a port aligning direction L." The port aligning direction L of this embodiment is the same as a direction in which the four cylinders 5 of the in-line four-cylinder engine align (a cylinder aligning direction) and is a direction that is parallel to a center of a crankshaft of the engine 1. An intake passage 6 (an intake pipe) is connected to upstream sides of the intake ports 3 via an intake manifold 2 (an intake manifold), and an exhaust passage 7 is connected to downstream sides of the exhaust ports 4 via an exhaust manifold (an exhaust manifold).

An air filter 8, a low-pressure throttle valve 9 and a compressor of the turbocharger 10 are provided sequentially in that order from an upstream side along the intake passage 6. A throttle body 6A (the intake pipe) is provided at a downstream end portion of the intake passage 6, and a high-pressure throttle valve 11 (a throttle valve) is incorporated in the throttle body 6A. On the other hand, a turbine of the turbocharger 10 and an exhaust emission control device 12 are provided sequentially in that order from an upstream side along the exhaust passage 7.

The low-pressure EGR system 13 and the high-pressure EGR system 14 are provided on the engine 1 to recirculate exhaust gas that flows through the exhaust passage 7 to the intake passage 6. The low-pressure EGR system 13 includes not only a passage 13A that connects together a downstream portion that is downstream of the exhaust emission control device 12 provided on the exhaust passage 7 and an upstream portion that is upstream of the compressor on the intake passage 6 but also a filter 13B, a cooler 13C and a valve 13D that are provided on the passage 13A. A flow rate (a low-pressure EGR amount) of exhaust gas that flows through the passage 13A varies according to a position of the valve 13D and a position of the low-pressure throttle valve 9. The high-pressure EGR system 14 includes not only a passage 14A that connects together an upstream portion that is upstream of the turbine on the exhaust passage 7 and the intake manifold 2 but also a valve 14D that is provided on the passage 14A. A flow rate (a high-pressure EGR amount) of exhaust gas that flows through the passage 14A varies according to a position of the valve 14D and a position of the high-pressure throttle valve 11.

The intake manifold 2 takes in intake air that has arrived thereat from the intake passage 6 and high-pressure EGR gas that has arrived thereat from the passage 14A to induce a mixture of the intake air and the EGR gas into the plurality of intake ports 3 in the cylinder head 1H. Hereinafter, as shown in Fig. 1, an opening of the intake manifold 2 that is connected to the intake passage 6 from which intake air is taken in will be referred to as an "inlet 21," and an opening of the intake manifold 2 that is connected to the intake-side side surface of the cylinder head 1H from which intake air is discharged will be referred to as an "outlet 34." An outlet portion of the intake manifold 2 of this embodiment that is connected to the intake ports 3 does not branch although a general intake manifold (a manifold) does, and hence, one outlet 34 of a horizontally elongated shape covers the openings of all the intake ports 3.

An air-to-liquid intercooler 15 is incorporated in the intake manifold 2 to cool intake air by means of a coolant. The intercooler 15 is provided in the intake manifold 2 so as to occupy a whole cross section of an intake flow path that is formed in an interior of the intake manifold 2. Consequently, intake air that passes through the intake manifold 2 passes through the intercooler 15 to be cooled.

The engine 1 includes a circulation path 16A that is provided separately from a cooling system for the engine 1 for use for the intercooler 15, and an electric pump 16B and a radiator 16C that are provided on the circulation path 16A. The coolant that is sent under pressure by the electric pump 16B cools intake air when the coolant passes through the intercooler 15 and is thereafter cooled in the radiator 16C, returning to the electric pump 16B.

### [2. Intake Air Supply Construction]

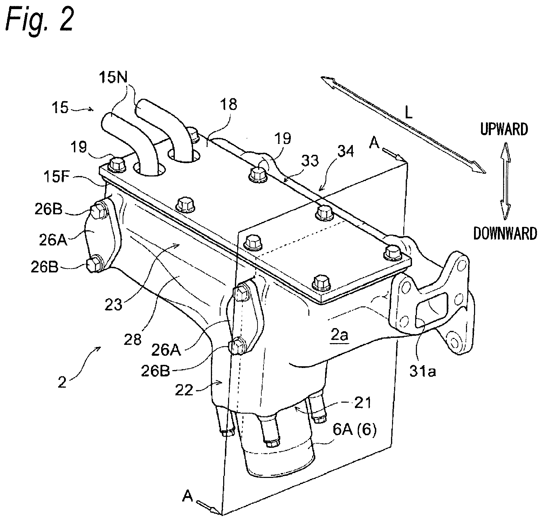

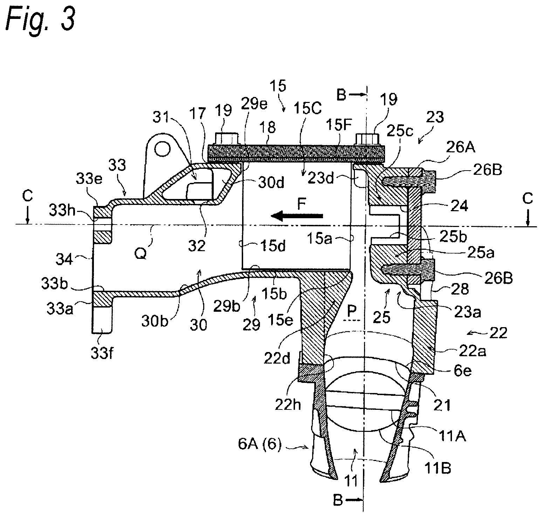

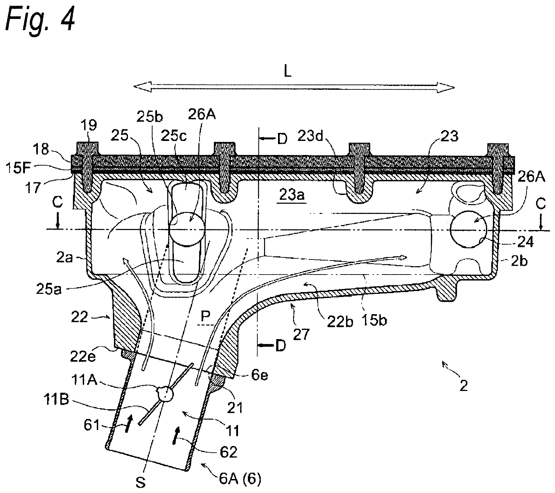

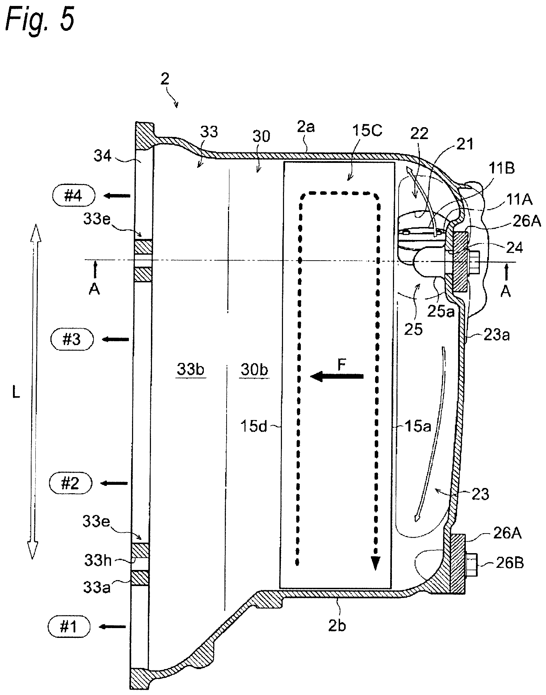

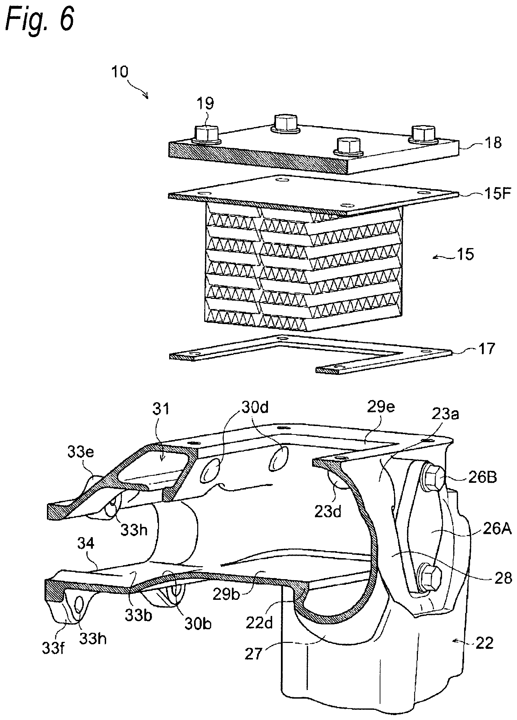

Fig. 2 is a schematic perspective view showing an external appearance of the intake air supply construction of this embodiment. Fig. 3 is a sectional view taken along a plane A-A and seen from a direction indicated by arrows A in Figs. 2 and 5. Fig. 4 is a sectional view taken along a line B-B and seen from a direction indicated by arrows B in Fig. 3. Fig. 5 is a sectional view taken along a line C-C and seen from a direction indicated by arrows C in Figs. 3 and 4. In these figures, only a downstream end portion (that is, the throttle body 6A) of the intake passage 6 is shown. Fig. 6 is an exploded perspective view of a section taken along a line D-D and seen from a direction indicated by arrows D in Fig. 4, and the intake passage 6 is omitted therefrom. In Fig. 4, a lower surface 15b of the intercooler 15 is indicated by a chain double-dashed line which is positioned on an opposite side to the cross section taken along the line B-B and seen from the direction indicated by the arrows B.

The intake air supply construction of this embodiment includes the intake passage 6, the intake manifold 2 and the intercooler 15 that are described above. Firstly, the configuration of the intercooler 15 that is incorporated in the intake manifold 2 will be described. The intercooler 15 has a core portion 15C where intake air is cooled, a fixing flange portion 15F and nipple portions 15N that are connected to the circulation path 16A.

As shown in Figs. 3, 5 and 6, the core portion 15C has a line through which the coolant flows and a line through which intake air flows and constitutes a portion where heat transfer takes place between the coolant and intake air to thereby cool the intake air. The core portion 15C has a substantially rectangular parallelepiped shape that is long along the port aligning direction L and is accommodated into an interior of the intake manifold 2 from a ceiling opening portion 29e that is formed in an upper surface of the intake manifold 2. The core portion 15C is placed so as to occupy the whole cross section of the intake flow path that is formed in the interior of the intake manifold 2 so that all the intake air entered from the inlet 21 passes through the core portion C.

Hereinafter, a surface from which intake air flows into the core portion 15C will be referred to as an "intake air inlet surface 15a," and a surface from which intake air flows out of the core portion 15C will be referred to as an "intake air outlet surface 15d." These two surfaces 15a, 15d are parallel. In addition, a direction in which intake air passes through the intercooler 15 will be referred to as an "intake air passing direction F." The intake air passing direction F is a direction in which intake air is directed from the intake air inlet surface 15a to the intake air outlet surface 15d and is a direction that is at right angles to the two surfaces 15a, 15d. The intake air passing direction F is substantially at right angles to the port aligning direction L when looking at an upper surface of the core portion 15C from thereabove.

As shown in Figs. 2 to 4 and 6, the flange portion 15F is a portion where the intercooler 15 is fixed to the intake manifold 2. In this embodiment, the flange portion 15F is provided as a rectangular thin plate whose size is greater one size than that of the ceiling opening portion 29e. The upper surface of the core portion 15C is fixed to a portion of the flange portion 15F that excludes a circumferential edge portion thereof, and the flange portion 15F is integrated with the core portion 15C. In the intercooler 15, the core portion 15C is accommodated in the intake manifold 2, and the flange portion 15F is placed on an upper surface of the intake manifold 2 so as to cover the ceiling opening portion 29e.

A sheet-like gasket 17 is interposed between the circumferential edge portion of the flange portion 15F and the upper surface of the intake manifold 2 that surrounds the ceiling opening portion 29e. In addition, a flat top plate 18 is placed on the upper surface of the flange portion 15F. The top plate 18 is a member that fastens the flange portion 15F of the intercooler 15. The top plate 18 has the same shape as that of the flange portion 15F when looking at the top plate 18 from thereabove and a thickness that is greater than that of the flange portion 15F. The intercooler 15 is fixed to the intake manifold 2 by fastening together the top plate 18, the flange portion 15F and the gasket 17 with a plurality of bolts 19 from above the top plate 18. In this embodiment, four bolts 19 are disposed to be aligned at substantially equal intervals at end portions of the top plate 18 that extend along the port aligning direction L.

The nipple portions 15N are connecting portions that are provided individually at an upstream end and a downstream end of a coolant flow path (indicated by a thick broken line arrow in Fig. 5) that the core portion 15C possesses and extend upwards through the top plate 18.

Next, the high-pressure throttle valve 11 that is incorporated in the intake passage 6 will be described. The high-pressure throttle valve 11 is an electronically controlled valve and is disposed near an opening 6e of the intake passage 6 that lies on a downstream side thereof, as shown in Figs. 3 and 4. The high-pressure throttle valve 11 is a butterfly type valve in which a valve body 11B rotates about a shaft portion 11A as shown in Figs. 3 to 5. A position (an angle) of the valve body 11B can be on-off controlled to be located in a fully closed position where a minimum flow rate is provided and a fully opened position where a maximum flow rate is provided. The valve body 11B can also be controlled to be located in an arbitrary intermediate position as shown in Fig. 4 according to a control signal. A rotational angular range of the valve body 11B of this embodiment is 90 degrees. When the valve body 11B rotates through 90 degrees in one direction from the fully closed position, the valve body 11B arrives at the fully opened position, whereas when the valve body 11B rotates through 90 degrees in an opposite direction from the fully opened position, the valve body 11B arrives at the fully closed position. Additionally, the flow rate can be controlled minutely at the intermediate position between the fully closed and opened positions. The shaft portion 11A extends in a direction that follows the intake air passing direction F (a direction that is at right angles to the port aligning direction L).

Next, a specific configuration of the intake air supply construction will be described in detail. As shown in Fig. 2, the intake manifold 2 has an upper portion that incorporates the intercooler 15 and a lower portion that is provided so as to protrude downwards from a portion of the upper portion. As shown in Figs. 2 to 6, the portion where the intercooler 15 is incorporated is a portion that extends in the port aligning direction L and has an installing portion 29 where the core portion 15C of the intercooler 15 is installed, an upstream portion 23 that constitutes a portion that lies directly upstream of the core portion 15C in relation to the intake air passing direction F, a downstream portion 30 that constitutes a portion that lies directly downstream of the core portion 15C in relation to the intake air passing direction F, and an outlet portion 33 that constitutes a most downstream portion of the intake manifold 2. The outlet 34 opens to a downstream side end face 33a of the outlet portion 33.

On the other hand, the portion that protrudes downwards from the portion of the upper portion is connected to the intake passage 6 and has an inlet portion 22 that constitutes a most upstream portion of the intake manifold 2. The inlet 21 opens to an upstream side en face 22e of the inlet portion 22. In this embodiment, the inlet 21 is provided further downwards than a lower surface 15b of the intercooler 15. That is, the end face 22e of the inlet portion 22 is located downwards than the lower surface 15b of the intercooler 15.

As shown in Figs. 3 and 4, the inlet portion 22 is a portion that extends from the end face 22e where the inlet 21 is formed to the lower surface 15b of the intercooler 15, and the throttle body 6A is fixed to the end face 22e. The inlet portion 22 is provided so that a flow path area expands along the port aligning direction L as the inlet portion 22 extends upwards from the inlet 21, and the upstream portion 23 is provided continuously above the inlet portion 22. The upstream portion 23 is provided along the intake air inlet surface 15a of the intercooler 15, and the flowing direction of intake air that flows in from the inlet 21 is changed to the intake air passing direction F at this upstream portion 23. In this embodiment, the intake passage 6 is connected to the inlet portion 22 of the intake manifold 2 from below in a direction that intersects the intake air passing direction F of the intercooler 15.

As shown in Fig. 4, the inlet 21 has the same shape as that of the opening 6e of the intake passage 6 and opens downwards at the end face 22e of the inlet portion 22. In this embodiment, the inlet 21 is provided closer to a side surface 2a, of two side surfaces 2a, 2b of the intake manifold 2 that lie to follow the intake air passing direction F and intersect the port aligning direction L. Hereinafter, the side surface 2a that lie closer to the inlet 21 will be referred to as a "first side surface 2a," and the other side surface 2b will be referred to as a "second side surface 2b." In this embodiment, the inlet 21 is provided to lie closer (offset) to the first side surface 2a than the second side surface 2b from a center of the port aligning direction L of the intake manifold 2 along the port aligning direction L.

The first side surface 2a is a surface that is situated on a side facing one of two flow paths 61, 62 that are divided into two by the high-pressure throttle vale 11 when the high-pressure throttle valve 11 is located in an intermediate position. The flow path 61 has a flow path area being narrower than that of the flow path 62 at upstream side of the shaft portion 11A. As shown in Fig. 4, when the high-pressure throttle valve 11 is in the intermediate position, the intake passage 6 is divided into the flow path 61 that passes on one surface side of the valve body 11B and the flow path 62 that passes on the other surface side of the valve body 11B in the port aligning direction L. The inlet 21 is provided to lie closer to the first side surface 2a that lies on the side facing the flow path 61 (the left flow path in the figure) whose flow path area get narrower upstream of the shaft portion 11A. Since intake air tends to easily flow into the flow path 62 (the right flow path in the figure) whose flow path area gets wider upstream of the shaft portion 11A, with the high-pressure throttle valve 11 located in the intermediate position (neither in the fully closed position nor in the fully opened position), the flow rate of intake air that flows in towards the second side surface 2b of the intake manifold 2.

In addition, the end face 22e of the inlet portion 22 is provided so as to be inclined downwards in a direction directed from the first side surface 2a to the second side surface 2b, and a downstream side end face of the throttle body 6A is brought into abutment with this end face 22e. The intake passage 6 is connected to the inlet portion 22 while being inclined relative to the port aligning direction L with an end face of a downstream end portion thereof (that is, the throttle body 6A) brought into abutment with the end face 22e of the inlet portion 22 in such a posture that the end face is oriented to the second surface 2b. A connecting portion of the intake passage 6 is inclined in a direction in which an axis center S (an alternate long and short dash line in Fig. 4) of the throttle body 6A moves towards the second side surface 2b as the intake passage 6 extends downstream in relation to the flowing direction of intake air. Namely, the inclining direction of the throttle body 6A is the same as a gradient of the valve body 11B when the high-pressure throttle valve 11 is located in the intermediate position. This makes it easier for intake air that flows into the intake manifold 2 to flow towards the second side surface 2b.

A projecting portion 25 is provided in the intake manifold 2 so as to divide and disperse intake air that flows in from the inlet 21 to both sides of the port aligning direction L (that is, so that intake air flows towards both the two side surfaces 2a, 2b). The projecting portion 25 is provided on an inner surface of the intake manifold 2 in a position lying upstream of the intercooler 15 in relation to the flowing direction of intake air so as to project therefrom. In this embodiment, as shown in Figs. 3 to 5, the projecting portion 25 is provided on a side surface portion 23a of the upstream portion 23 that faces the intake air inlet surface 15a of the intercooler 15 in a position that overlaps the high-pressure throttle valve 11 in an up-to-down direction.

Specifically speaking, the projecting portion 25 is provided within a range P (defined as a portion between two broken lines in Figs. 3, 4) that is defined by expanding an outline of the flow path towards the intake manifold 2 along the axis center S so that a flow path area (a cross-sectional area that is at right angles to the axis center S) and a cross-sectional shape of the throttle body 6A do not change. As shown in Fig. 5, the projecting portion 25 is disposed so as to overlap the inlet 21 when seen from above. In addition, when seen from a side, the projecting portion 25 is set in a position where intake air that flows in from the throttle body 6A impinges on the projecting portion 25 as shown in Fig. 4.

In this embodiment, the range P has a circular cylindrical shape. A cross-sectional shape of the range P is sized so as to correspond to a flow path cross-sectional shape defined near the high-pressure throttle valve 11. Namely, a plane resulting when the flow path of the throttle body 6A is cut along a section that is at right angles to the axis center S corresponds to the cross-sectional shape of the range P. The projecting portion 25 is formed so as to be elongated along the direction of the axis center S (an axial direction) of the throttle body 6A. In this embodiment, the projecting portion 25 is elongated in the up-to-down direction, and a lower end portion thereof tapers towards the inlet 21.

In the configuration described heretofore, intake air that flows into the intake manifold 2 from the inlet 21 impinges on the projecting portion 25 to thereby be divided into a flow that flows towards the first side surface 2a and a flow that flows towards the second side surface 2b as indicated by white arrows in Figs. 4 and 5. As this occurs, as a result of the position of the inlet 21 and the inclination of the throttle body 6A that are described above, the flow rate of intake air that flows towards the second side surface 2b becomes greater than the flow rate of intake air that flows towards the first side surface 2a.

As shown in Figs. 3 to 5, in this embodiment, the projecting portion 25 also functions as a boss portion where a lid 26A is fastened to close an opening portion 24 that is formed in the side surface portion 23a of the upstream portion 23. The opening portion 24 constitutes a through hole for use in carrying out assembling work or maintenance work. In this embodiment, the opening portion 24 is intended to be used in passing a tool for tightening a bolt with which the intake manifold 2 is fixed to the intake-side side surface of the cylinder head 1H (neither of the tool and the bolt is shown), and two opening portions 24 are provided so as to be spaced apart from each other in the port aligning direction L. Each of the opening portions 24 is formed on an extension Q (an alternate long and short dashed line showing the section taken along the line C-C in Fig. 3) of an axis center of a bolt hole 33h, which will be described later, (that is, a bolt insertion direction) and has a substantially circular shape that is so sized as to allow the passage of the tool. The tool is inserted along the extension Q to fix the intake manifold 2.

As shown in Figs. 2, 3 and 6, the lid 26A is fixed to an outer surface of the side surface portion 23a to close each of the opening portions 24 from an exterior. In this embodiment, the lid 26A has a substantially rhombus shape and is attached to the side surface portion 23a in such a posture that a longer diagonal extends in the up-to-down direction. The lid 26A is fixed to the side surface portion 23a by bolts 26B being tightened at an upper end and a lower end thereof. In this embodiment, two identical lids 26A are provided on the intake manifold 2 so as to be spaced apart from each other in the port aligning direction L. The projecting portion 25 constitutes the boss portion where one of the lids 26A is fastened with the bolt 26B.

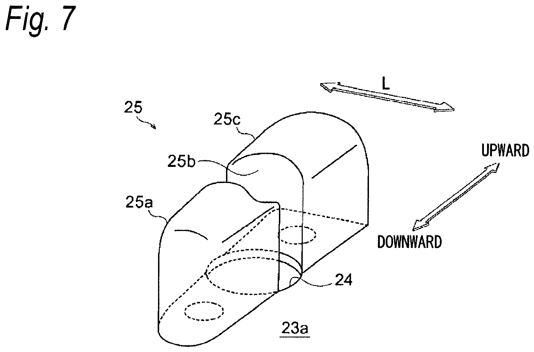

In this embodiment, as shown in Fig. 3, the projecting portion 25 has a recess portion 25b that is formed by recessing a part of a surface facing the intake air inlet surface 15a of the intercooler 15 (a surface facing the outlet 34). Fig. 7 is a schematic enlarged perspective view of the projecting portion 25 of this embodiment. The recess portion 25b is positioned at an intermediate portion of the projecting portion 25 in a longitudinal direction (that is, the up-to-down direction) and is provided so as to penetrate the projecting portion 25 in the port aligning direction L. By doing so, protruding portions 25a, 25c are formed above and below the recess portion 25b, respectively, so as to be protuberant relative to the recess portion 25b. The two protruding portions 25a, 25c are provided so as to protrude inwards from the side surface portion 23a. Namely, the projecting portion 25 has the two protruding portions 25a, 25c that are aligned so as to be spaced apart from each other in the up-to-down direction and the recess portion 25b that is provided between the protruding portions 25a, 25c so as to be recessed therefrom.

In this embodiment, the recess portion 25b is formed into a substantially circular cylindrical shape that extends in the direction of the extension Q of the axis center of the bolt hole 33h, and the opening portion 24 is formed in a bottom surface thereof. Namely, the recess portion 25b is provided as a through hole that penetrates the projecting portion 25 and the side surface portion 23a in the direction of the extension Q. On the other hand, the two projecting portions 25a, 25c each have a hole portion that is opened to the outer surface of the side surface portion 23a to which the lid 26A is attached. Threads are cut on the hole portion so that the bolt 26B is screwed thereinto.

The two protruding portions 25a, 25b function to disperse intake air that flows in from the inlet 21. In particular, intake air is dispersed more at edge portions of the protruding portions 25a, 25c and the recess portion 25b. Additionally, the protruding portion 25a that lies below the recess portion 25b is formed so that a lower end portion thereof tapers towards the inlet 21 and functions to divide intake air that flows into the intake manifold 2 from the inlet 21 into two directions. Namely, intake air that flows in from the inlet 21 impinges on the lower protruding portion 25a to thereby be divided and dispersed into flows directed to one direction and the other direction along the port aligning direction L. By doing so, intake air flows into the intercooler 15 uniformly.

As shown in Figs. 3 and 5, the intercooler 15 is disposed within the intake manifold 2 so that a portion of the intercooler 15 that lies on an upstream side thereof in relation to the flowing direction of intake air narrows the flow path area of the inlet portion 22. Specifically, the intercooler 15 is disposed so that the portion of the intercooler 15 that lies on the upstream side in relation to the flowing direction of intake air intrudes into the range P defined by expanding the outline of the flow path of the throttle body 6A. Namely, the intercooler 15 is disposed so as to lie closer to the side surface portion 23a so that a distance between the intake air inlet surface 15a of the intercooler 15 and the side surface portion 23a of the upstream portion 23 gets shorter than a diameter of the range P.

In the intake manifold 2 of this embodiment, a protruding portion 22d is provided directly below a portion of the intercooler 15 that protrudes into the range P. The protruding portion 22d is provided on a side surface portion 22a of the inlet portion 22 so as to protrude inwards to thereby connect smoothly an inner surface 22h of the inlet portion 22 that lies near the end face 22e and a lower edge portion 15e of the intercooler 15 that lies on the upstream side in relation to the flowing direction of intake air. Namely, the protruding portion 22d protrudes inwards more as it extends upwards from the inner surface 22h so as to support the whole of a lower surface of the portion of the intercooler 15 that intrudes into the range P. By doing so, intake air that flows into the intake manifold 2 from the inlet 21 is deflected towards the side surface portion 22a by the protruding portion 22d, whereby the intake air that so flows in flows as far as an upper portion of the upstream portion 23.

Incidentally, in the intake manifold 2, the flow path area of intake air is contracted by the arrangement of the intercooler 15 and the protruding portion 22d, and therefore, it is possible that a pressure loss is generated in the intake manifold 2. To cope with this, two expanding portions 27, 28 are provided in the intake manifold 2 to reduce the pressure loss. As shown in Fig. 4, the first expanding portion 27 is provided on a lower surface portion 22b of the inlet portion 22 so as to expand outwards therefrom. The first expanding portion 27 expands outwards of the range P defined by expanding the outline of the flow path of the throttle body 6A. By providing the first expanding portion 27 in that way, the flow path area of intake air is expanded in the up-to-down direction, whereby the generation of pressure loss is suppressed.

As shown in Figs. 3 and 6, the second expanding portion 28 is formed on a surface portion of the intake manifold 2 that faces the intake air inlet surface 15a of the intercooler 15 so as to expand outwards therefrom. In this embodiment, the second expanding portion 28 is provided so as to extend over the side surface portion 23a of the upstream portion 23 and the side surface portion 22a of the inlet portion 22. By doing so, the flow path area of intake air is also expanded in a direction that follows the intake air passing direction F, whereby the generation of pressure loss is suppressed more effectively. It should be noted that only either of the first expanding portion 27 and the second expanding portion 28 is provided.

The installing portion 29 is positioned further upwards than the inlet portion 22 and is configured so as to accommodate the core portion 15C of the intercooler 15 substantially without any space left therebetween. The ceiling opening portion 29e is provided in the upper portion of the installing portion 29 so as to allow the core portion 15C to be accommodated in the interior of the intake manifold 2. The ceiling opening portion 29e has a rectangular shape when seen from above so that the core portion 15C is accommodated therein tightly. The lower surface 15b of the core portion 15C is disposed so as to be brought into contact with a bottom surface 29b of the installing portion 29. The flange portion 15F is placed on the upper surface of the installing portion 29 that surrounds the ceiling opening portion 29e via the gasket 17.

As shown in Figs. 3 and 5, the downstream portion 30 is provided to extend along the intake air outlet surface 15d of the intercooler 15. High-pressure EGR gas is mixed into intake air that has passed through the intercooler 15 in this downstream portion 30. An EGR induction path 31 is provided in an upper portion of the downstream portion 30 so as to extend along the port aligning direction L. The EGR induction path 31 constitutes a flow path from which high-pressure EGR gas is induced into the interior of the intake manifold 2 and has a slit-like EGR induction port 32 that is formed in a lower surface portion thereof so as to extend along the port aligning direction L.

A connecting port 31a is provided at one end of the EGR induction path 31 in the port aligning direction L as shown in Fig. 2. A passage 14A of the high-pressure EGR system 14 is connected to the connecting port 31a. High-pressure EGR gas that has flowed through the passage 14A flows into the EGR induction path 31 from the connecting port 31a, passes through the EGR induction path 31 and flows into the downstream portion 30 from the EGR induction port 32. In the downstream portion 30, intake air that is cooled as a result of having passed through the intercooler 15 and the high-pressure EGR gas are mixed together.

As shown in Figs. 3, 4 and 6, pluralities of fastening bosses 23d, 30d are provided in the upper portions of the upstream portion 23 and the downstream portion 30 so as to protrude into spaces defined in the upstream portion 23 and the downstream portion 30. The bolts 19 are fastened to these fastening bosses 23d, 30d to fix the intercooler 15 in place. The fastening bosses 23d that are provided in the upstream portion 23 function to generate turbulence in intake air that flows into the upstream portion 23, whereby intake air is allowed to flow into the intercooler 15 uniformly. On the other hand, the fastening bosses 30d that are provided in the downstream portion 30 also protrude partially into the EGR induction path 31 and hence function to generate turbulence in intake air that has passed through the intercooler 15 and high-pressure EGR gas that flows through the EGR induction path 31 so as to promote the mixing of the intake air and the high-pressure EGR gas.

The outlet portion 33 is fixed to the intake-side side surface of the cylinder head 1H, and the end face 33a to which the outlet 34 opens is brought into abutment with the intake-side side surface. Pluralities of fixing portions 33e, 33f are provided on the outlet portion 33 to fix the intake manifold 2 to the cylinder head 1H. In this embodiment, the outlet portion 33 has two fixing portions 33e that are provided along an upper edge of the outlet 34 and five fixing portions 33f that are provided along a lower edge of the outlet 34. The fixing portions 33e, 33f each have a bolt hole 33h that is opened in a direction that is at right angles the end face 33a. The bolt holes 33h of the upper fixing portions 33e are provided in an interior of the outlet portion 33, whereas bolt holes 33h of the lower fixing portions 33f are provided an exterior of the outlet portion 33.

The two fixing portions 33e are disposed symmetrical with each other with respect to a vertical plane that passes through a center of the upper edge of the outlet 34 in relation to the port aligning direction L. In this embodiment, the fixing portions 33e are provided individually between a first cylinder (#1) and a second cylinder (#2) and between a third cylinder (#3) and a fourth cylinder (#4) as shown in Fig. 5. The opening portions 24 described before are provided on the extends Q of the axis centers of the bolt holes 33h that are opened in the fixing portions 33e. When fixing the intake manifold 2 to the cylinder head 1H, with the end face 33a kept in abutment with the cylinder head 1H, the tool is inserted from the opening portion 24 to pass the bolt into the bolt hole 33h of the fixing portion 33e, and the bolt is then tightened with the tool. It is noted that the intercooler 15 is accommodated after the intake manifold 2 has been fixed to the cylinder head 1H.

In the five fixing portions 33f, the two fixing portions 33f that lie at both ends are disposed individually at both end portions of the lower edge of the outlet 34 in the port aligning direction L, and the fixing portion 33f at the center of the lower edge is disposed at the center of the port aligning direction L, the remaining two fixing portions 33f being disposed symmetrical with each other with respect to plane across the central fixing portion 33f. Bolts do not necessarily have to be fastened to all the lower five fixing portions 33f, and hence, the fixing portions 33f may be selected as required for the bolts to be fastened thereto. For example, in the five fixing portions 33f, the two fixing portions 33f at both the ends and the central fixing portion 33f are selected so that the bolts are fastened to those three fixing portions 33f. Alternatively, the bolts may be fastened to the four fixing portions 33f excluding the fixing portion 33f that overlaps the inlet portion 22 in the bolt inserting direction.

A bottom surface 33b of the outlet portion 33 is provided further downwards than the bottom surface 29b of the installing portion 29 and is connected smoothly to the bottom surface 29b of the installing portion 29 by a bottom surface 30b of the downstream portion 30. Namely, the bottom surface 30b of the downstream portion 30 is provided as a sloping surface that slopes downwards towards a downstream side of the flow of intake air. By doing so, condensed water produced in the intercooler 15 flows towards the outlet portion 33 over the bottom surface 30b as soon as the condensed water is produced without staying in the bottom surface 29b of the installing portion 29 to thereby be discharged into the intake ports 3 from the outlet 34. When a slight amount of condensed water is induced into the cylinders 5, not only is the output of the engine 1 enhanced, but also the combustion temperature is reduced to thereby enhance the exhaust emissions controlling performance.

### [3. Advantages]

(1) In the intake air supply construction described heretofore, the inlet 21 of the intake manifold 2 is provided so as to lie closer to one of the two side surfaces 2a, 2b. Namely, the inlet 21 is provided so as to lie closer (offset) to the first side surface 2a than the second side surface 2b of the intake manifold 2 along the port aligning direction L from the center of the port aligning direction L. Further, the intake passage 6 is connected to the intake manifold 2 in such a state that the axis center S of the downstream end portion (the throttle body 6A) is inclined so as to move towards the second side surface 2b as it extends towards the downstream side of the flow of intake air.
   This configuration makes it easy for intake air that flows into the intake manifold 2 to flow towards the second side surface 2b. Namely, since the flow rate of intake air that flows towards the second side surface 2b that lies in the opposite direction to the direction in which the inlet 21 is offset is increased, it is possible to maintain the flow velocity of the intake air that flows into the intake manifold 2. Owing to this, intake air is allowed to flow as far as the ends of the intercooler 15, whereby intake air can be supplied to the whole of the intercooler 15. Consequently, the cooling efficiency of intake air can be enhanced.
(2) In the intake air supply construction described above, the inlet 21 is provided so as to lie closer to the first side surface 2a situated on the side facing, of the two flow paths 61, 62 that are divided into two by the high-pressure throttle vale 11 when the high-pressure throttle valve 11 is located in the intermediate position, the flow path 61 whose flow path area gets narrower upstream of the shaft portion 11A. Owing to this, when the high-pressure throttle valve 11 is located in the intermediate position, intake air tends to flow easily into the other flow path 62, whereby the flow rate of intake air that flows in towards the second side surface 2b of the intake manifold 2 can be increased. This allows intake air flowing into the intake manifold 2 to arrive at both the ends of the intake manifold 2, thereby making it possible to enhance the cooling efficiency more.
(3) In the intake air supply construction described above, since the intake passage 6 is connected to the intake manifold 2 from the direction that intersects the intake air passing direction F of the intercooler 15, the flowing direction of intake air that flows in from the inlet 21 changes before the intake air flows into the intercooler 15. Namely, intake air that flows in from the inlet 21 is designed not to flow straight towards the intercooler 15 but to change its course of flow just before the intake air arrives at the intercooler 15. Owing to this, the intake air that flows in from the inlet 21 can be dispersed without being offset to one location, whereby the intake air can be supplied to the intercooler 15 more uniformly. This can enhance the cooling efficiency of intake air more.
   It is preferable that the intake pipe is connected to the intake manifold from a direction that intersects both the aligning direction and the passing direction. For example, in case the aligning direction is horizontal, the intake pipe is preferably connected to the intake manifold from, in directions that intersect the passing direction, directions excluding a horizontal direction (specifically, from an upward direction or a downward direction).
   In the intake air supply construction described above, the intake pipe 6 is connected to the intake manifold 2 in the direction that intersects not only the intake air passing direction F but also the port aligning direction L. This can reduce the influence by the offset intake air flow resulting from the inertia of intake air, compared with, for example, a case where the intake pipe 6 is connected to the intake manifold 2 horizontally, whereby intake air can be supplied to the intercooler 15 more uniformly. Consequently, the cooling efficiency of intake air can be further enhanced.
(4) In the intake air supply construction described above, intake air that flows in from the inlet 21 can be divided and dispersed to both the sides of the port aligning direction L by the projecting portion 25 that is provided on the inner surface of the side surface portion 23a of the intake manifold 2 so as to project therefrom, and hence, the intake air so flowing in is allowed to arrive at both the ends of the intercooler 15. In addition, eddy currents (turbulent currents) of intake air are generated as a result of the intake air impinging on the projecting portion 25, whereby the intake air is allowed to flow into the intercooler 15 uniformly, thereby making it possible to enhance more the cooling efficiency.
(5) In the intake air supply construction described above, this projecting portion 25 is provided within the range P defined when the outline of the flow path of the throttle body 6A is expanded towards the intake manifold 2. Since the flow velocity of intake air is fast in the range P, it is possible to increase the magnitude of turbulence that is generated when intake air impinges on the projecting portion 25 by providing the projecting portion 25 within the range P. This enables intake air to flow into the intercooler 15 more uniformly, thereby making it possible to enhance more the cooling efficiency.
(6) In the intake air supply construction described above, since the projecting portion 25 is formed so as to taper towards the inlet 21, intake air that flows in from the inlet 21 is easily divided to both the sides of the port aligning direction L, allowing the intake air to arrive at both the ends of the intercooler 15. This allows the intake air to be supplied to the intercooler 15 more uniformly, thereby making it possible to enhance more the cooling efficiency.
(7) In the intake air supply construction of this embodiment, the projecting portion 25 divides and disperses intake air that flows into the intake manifold 2 from the inlet 21 to both the sides of the port aligning direction L, and this projecting portion 25 also functions as the boss portion where the lid 26A that closes the opening portion 24 is fixedly fastened. Namely, since the projecting portion 25 is used not only to divide and disperse intake air that flows into the intake manifold 2 but also to fixedly fasten the lid 26A, intake air is allowed to flow as far as the ends of the intercooler 15 without increasing the number of parts involved. Consequently, intake air can be supplied to the whole of the intercooler 15, thereby making it possible to enhance the cooling efficiency.
(8) In the intake air supply construction of this embodiment, since the bottom surface 33b of the outlet portion 33 is provided further downwards than the bottom surface 29b of the installing portion 29, condensed water produced in the intercooler 15 is allowed to flow to the intake ports 3 of the cylinder head 1H as soon as the condensed water is produced. Namely, condensed water produced can be treated appropriately so that the condensed water does not stay within the intake manifold 2. This can prevent a reduction in combustion stability and/or a reduction in durability and reliability of the engine 1. In addition, since a slight amount of condensed water is introduced into the cylinders 5, it is possible to enhance the output of the engine 1. Further, since the combustion temperature is reduced by the introduction of condensed water into the cylinders 5, nitrogen oxides (NOx) can be reduced, whereby the intake air supply construction of this embodiment can contribute to an increase in exhaust emissions controlling performance of the engine 1.

### [4. Others]

Thus, while the embodiment of the invention has been described heretofore, the invention is not limited to the embodiment and can be modified variously within the scope of the invention as defined by the claims.

In the embodiment, the inlet 21 is provided so as to lie closer to the first side surface 2a that is situated on the side facing the flow path 61 of the two flow paths 61, 62 that are divided into two when the high-pressure throttle valve 11 is located in the intermediate position, here, the flow path 61 has the flow path area being narrower that of the flow path 62 at upstream side of the shaft portion 11A. However, the inlet 21 may be offset in a direction that can be set irrespective of the high-pressure throttle valve 11. Namely, the inlet 21 may be provided so as to lie closer to the second side surface 2b that is situated on a side facing the flow path 62 of the two flow paths 61, 62 that are divided into two when the high-pressure throttle valve 11 is located in the intermediate position, here, the flow path 62 has a flow path area being wider than that of the flow path 61 at upstream side of the shaft portion 11A. As this occurs, the intake passage 6 should be connected to the intake manifold 2 in such a state that the axis center S of the throttle body 6A is inclined so as to move towards the first side surface 2a as the axis center S extends towards the downstream side of the flow of intake air.

In addition, the specific configuration of the intake manifold 2 is not limited to that described above. For example, the intake manifold 2 may be formed so as to be divided into branches having the same number of outlets as that of openings of the intake ports 3 as in the case with a general intake manifold. The inlet 21 does not necessarily have to be provided below the intercooler 15 but may be provided above the intercooler 15 or in a position that faces the intake air inlet surface 15a of the intercooler 15.

In the embodiment, while the projecting portion 25 is described as having the function as the boss portion, the projecting portion 25 may be provided as the exclusive portion that divides intake air. As this occurs, the projecting portion 25 does not have to have the elongated shape and hence may have any shape as long as it can divide and disperse intake air.

The intake air supply construction described heretofore can also be applied to any other types of engines than the engine 1 described above. Namely, the intake air supply construction can also be applied not only to the in-line four-cylinder engine but also to a single-cylinder engine or a V-type multi-cylinder engine. The intake air supply construction can be applied to at least engines including two or more intake ports whether they are gasoline engines or engines that do not include the EGR systems 13, 14 and the turbocharger 10.

### Reference Signs List

1 engine
1H cylinder head
2 intake manifold
2a first side surface, one of side surfaces
2b second side surface, the other of side surfaces
3 intake port
6 intake passage (intake pipe)
6A throttle body (intake pipe, downstream end portion)
61 one flow path whose flow path area is narrower
62 the other flow path whose flow path area is wider
11 high-pressure throttle valve (throttle valve)
11A shaft portion
15 intercooler
21 inlet
25 projecting portion
P range defined when an outline of a flow path at a downstream end portion is expanded
S axis center of the throttle body (the downstream end portion).

## Claims

1. An intake air supply construction for an engine, comprising:
an intake pipe (6) through which intake air flows;
an intake manifold (2) that is connected to the intake pipe (6) so as to induce the intake air into a plurality of intake ports (3) that are aligned in a cylinder head (1H);
an intercooler (15) that is incorporated in the intake manifold (2) so as to cool the intake air, wherein
the intake manifold (2) includes an inlet (21) that is provided to lie closer to one of two side surfaces (2a) that follows an intake air passing direction (F) in the intercooler (15) and intersects an aligning direction (L) of the intake ports (3),
a downstream end portion (6A) of the intake pipe (6) in relation to a flowing direction of the intake air is connected to the inlet (21) in a state that an axis center of the downstream end portion (6A) is inclined in a direction in which the axis center moves towards the other of the two side surfaces (2b) as the axis center extends towards a downstream side of the flow of the intake air,
the aligning direction (L) of the intake ports (3) and a passing direction in which the intake air passes through an interior of the inter cooler are set in a horizontal direction,
the downstream end portion (6A) of the intake pipe (6) is connected to the inlet (21) from a top-bottom direction which is a direction that intersects both the aligning direction (L) of the intake ports (3) and the passing direction of the intercooler (15),
the intake air supply construction further comprising:
a butterfly type throttle valve (11) that is incorporated in the downstream end portion (6A) of the intake pipe (6) so as to rotate about a shaft portion (11A),
**characterized in that**
the shaft portion (11A) extends in a direction that follows the intake air passing direction (F) in the intercooler (15) and is at right angles to the port aligning direction (L), wherein
the one of the two side surfaces (2a) is situated on a side of one of two flow paths that are divided into two by the throttle valve (11) when the throttle valve (11) is located in an intermediate position, wherein the one of the two flow paths has a flow path area being narrower than that of the other one of the two flow paths at upstream side of the shaft portion.

2. The intake air supply construction for an engine according to Claim 1, further comprising:
a projecting portion (25) that is disposed upstream of the intercooler (15) in relation to the flowing direction, is provided on an inner surface of the intake manifold (2) so as to project therefrom, and divides the intake air to both sides of the aligning direction (L).

3. The intake air supply construction for an engine according to Claim 2, wherein
the projecting portion (25) overlaps with the inlet (21) in a connection direction of the intake pipe.

4. The intake air supply construction for an engine according to Claim 2 or 3, wherein
the projecting portion (25) has a shape that tapers towards the inlet (21).

## Patentansprüche

1. Einlassluftzufuhrkonstruktion für einen Motor, mit:
einem Einlassrohr (6), durch das Einlassluft strömt;
einem Einlasskrümmer (2), der mit dem Einlassrohr (6) verbunden ist, um die Einlassluft in mehrere Einlasskanäle (3) einzuleiten, die in einem Zylinderkopf (1H) ausgerichtet sind;
einem Ladeluftkühler (15), der im Einlasskrümmer (2) eingebaut ist, um die Einlassluft zu kühlen, wobei
der Einlasskrümmer (2) einen Einlass (21) aufweist, der derart angeordnet ist, dass er näher an einer von zwei Seitenflächen (2a) liegt, die einer Ansaugluftdurchströmungsrichtung (F) im Ladeluftkühler (15) folgt, und eine Ausrichtungsrichtung (L) der Einlasskanäle (3) kreuzt,
ein in Bezug auf eine Strömungsrichtung der Einlassluft stromabwärtsseitiger Endabschnitt (6A) des Einlassrohrs (6) mit dem Einlass (21) in einem Zustand verbunden ist, in dem eine Achsenmitte des stromabwärtsseitigen Endabschnitts (6A) in eine Richtung geneigt ist, in der sich die Achsenmitte zu der anderen der beiden Seitenflächen (2b) bewegt, wenn sich die Achsenmitte in Richtung zu einer Stromabwärtsseite der Einlassluftströmung erstreckt,
die Ausrichtungsrichtung (L) der Einlasskanäle (3) und eine Durchströmungsrichtung, in der die Einlassluft einen Innenraum des Ladeluftkühlers durchströmt, auf eine horizontale Richtung eingestellt sind,
der stromabwärtsseitige Endabschnitt (6A) des Einlassrohrs (6) mit dem Einlass (21) von oben nach unten gerichtet verbunden ist, d.h. in einer Richtung, die sowohl die Ausrichtungsrichtung (L) der Einlasskanäle (3) als auch die Durchströmungsrichtung des Ladeluftkühlers (15) kreuzt,
wobei die Einlassluftzufuhrkonstruktion ferner aufweist:
ein Drosselventil (11) des Schmetterlingstyps, das im stromabwärtsseitigen Endabschnitt (6A) des Einlassrohrs (6) derart eingebaut ist, dass es sich um einen Wellenabschnitt dreht,
**dadurch gekennzeichnet, dass**
der Wellenabschnitt (11A) sich in einer Richtung erstreckt, die der Einlassluftdurchströmungsrichtung (F) im Ladeluftkühler (15) folgt und sich rechtwinklig zur Ausrichtungsrichtung (L) der Einlasskanäle erstreckt, wobei
die eine der beiden Seitenflächen (2a) auf einer Seite eines von zwei Strömungspfaden angeordnet ist, die durch das Drosselventil (11) zweigeteilt werden, wenn sich das Drosselventil (11) in einer Zwischenposition befindet, wobei der eine der beiden Strömungspfade auf der Stromaufwärtsseite des Wellenabschnitts einen Strömungspfadbereich aufweist, der schmaler ist als derjenige des anderen der beiden Strömungspfade.

2. Einlassluftzufuhrkonstruktion für einen Motor nach Anspruch 1, ferner mit:
einem in Bezug auf die Strömungsrichtung stromaufwärts vom Ladeluftkühler (15) angeordneten Vorsprungabschnitt (25), der auf einer Innenfläche des Einlasskrümmers (2) derart ausgebildet ist, dass er davon hervorsteht und die Einlassluft auf beide Seiten der Ausrichtungsrichtung (L) verteilt.

3. Einlassluftzufuhrkonstruktion für einen Motor nach Anspruch 2, wobei der Vorsprungabschnitt (25) den Einlass (21) in einer Verbindungsrichtung des Einlassrohrs überlappt.

4. Ansaugluftzufuhrkonstruktion für einen Motor nach Anspruch 2 oder 3, wobei der Vorsprungabschnitt (25) eine Form hat, die sich zum Einlass (21) hin verjüngt.

## Revendications

1. Construction d'alimentation en air d'admission pour un moteur comprenant :
un tuyau d'admission (6) à travers lequel s'écoule de l'air d'admission ;
une tubulure d'admission (2) qui est raccordée au tuyau d'admission (6) de manière à induire l'air d'admission dans une pluralité d'orifices d'admission (3) qui sont alignés dans une culasse (1H) ;
un refroidisseur intermédiaire (15) qui est incorporé dans la tubulure d'admission (2) de manière à refroidir l'air d'admission, dans laquelle
la tubulure d'admission (2) inclut une entrée (21) qui est prévue pour se trouver plus près d'une de deux surfaces latérales (2a) qui suit une direction de passage d'air d'admission (F) dans le refroidisseur intermédiaire (15) et croise une direction d'alignement (L) des orifices d'admission (3),
une partie d'extrémité aval (6A) du tuyau d'admission (6) par rapport à une direction d'écoulement de l'air d'admission est raccordée à l'entrée (21) dans un état dans lequel un centre axial de la partie d'extrémité aval (6A) est incliné dans une direction dans laquelle le centre axial se déplace vers l'autre des deux surfaces latérales (2b) comme le centre axial s'étend vers un côté aval de l'écoulement de l'air d'admission,
la direction d'alignement (L) des orifices d'admission (3) et une direction de passage dans laquelle l'air d'admission passe à travers un intérieur du refroidisseur intermédiaire sont réglées dans une direction horizontale,
la partie d'extrémité aval (6A) du tuyau d'admission (6) est raccordée à l'entrée (21) depuis une direction haut-bas qui est une direction qui croise à la fois la direction d'alignement (L) des orifices d'admission (3) et la direction de passage du refroidisseur intermédiaire (15),
la construction d'alimentation en air d'admission comprenant en outre :
un clapet d'étranglement de type papillon (11) qui est incorporé dans la partie d'extrémité aval (6A) du tuyau d'admission (6) de manière à tourner autour d'une partie arbre (11A),
**caractérisé en ce que**
la partie arbre (11A) s'étend dans une direction qui suit la direction de passage d'air d'admission (F) dans le refroidisseur intermédiaire (15) et est à angles droits par rapport à la direction d'alignement d'orifice (L), dans laquelle
la première des deux surfaces latérales (2a) est située sur un côté d'un de deux chemins d'écoulement qui sont divisés en deux par le clapet d'étranglement (11) quand le clapet d'étranglement (11) est situé dans une position intermédiaire, dans laquelle le premier des deux chemins d'écoulement a une superficie de chemin d'écoulement plus étroite que celle de l'autre des deux chemins d'écoulement au niveau du côté amont de la partie arbre.

2. Construction d'alimentation en air d'admission pour un moteur selon la revendication 1, comprenant en outre :
une partie de projection (25) qui est disposée en amont du refroidisseur intermédiaire (15) par rapport à la direction d'écoulement, est située sur une surface intérieure de la tubulure d'admission (2) de manière à se projeter depuis celle-ci, et divise l'air d'admission des deux côtés de la direction d'alignement (L) .

3. Construction d'alimentation en air d'admission pour un moteur selon la revendication 2, dans laquelle
la partie de projection (25) chevauche l'entrée (21) dans une direction de raccordement du tuyau d'admission.

4. Construction d'alimentation en air d'admission pour un moteur selon la revendication 2 ou 3, dans laquelle
la partie de projection (25) a une forme qui rétrécit vers l'entrée (21).
